# EUROPEAN PATENT APPLICATION

(11) **EP 2 378 753 A1**
(43) Date of publication of application: **19.10.2011**
(21) Application number: 11157000.8
(22) Date of filing: 01.08.2007
(51) Int. Cl.: H04M 1/725, G06Q 10/00, G06F 15/02

(54) **Method and device for snoozing a condition-based reminder.**

(30) Priority: 01.02.2007 US 670168
(62) Divisional of application: 07805283.4
(71) Applicant: Sony Ericsson Mobile Communications AB, 221 88 Lund (SE)
(72) Inventor: Lessing, Simon, S-211 56, Malmö (SE)
(74) Representative: VALEA AB

(57) **Abstract**

A method comprising the steps of detecting (810, 910), with a device (200), an occurrence of a first event associated with a reminder (520, 730) and generating (830, 930) the reminder (520, 730) with the device (200) in response to the first event. The method comprises the steps of changing by a user input, after the reminder (520, 730) has been generated by the device (200), the first event associated with the reminder (520, 730) to a second event, where the second event is of a type different than that of the first event, so that the reminder (520, 730) will be triggered upon an occurrence of the second event, snoozing (840, 940) the reminder (520, 730) associated with the occurrence of the second event and generating the reminder (520, 730), with the device (200), when the device detects the occurrence of the second event.

## Description

### BACKGROUND

Living in a world without snooze capabilities may be unimaginable for several people. From the moment many people wake up in the morning, they use the snooze feature on an alarm clock to get more sleep. Almost any system may utilize a snooze feature, such as setting a snooze for reminders, meetings, notes, etc. By using snooze, a user is telling a system providing an alert that they do not want to perform the alerted action right now, want to perform the alerted action at a later time, and want to be reminded of the action at the later time. Thus, a function of snooze is used to postpone alerted actions until a later time. However, most snooze features today are based on time (e.g., setting a snooze time to be reminded of an alerted action).

### SUMMARY

According to one aspect, a method may include detecting, with a device, a person associated with a reminder, generating the reminder with the device, and snoozing the reminder until the device again detects the person associated with the reminder.

Additionally, the method may include creating, with the device, the reminder associated with the person.

Additionally, creating, with the device, the reminder may include creating a reminder that requests performance of an action associated with the person by a user of the device.

Additionally, detecting, with a device, a person associated with a reminder may include providing a predetermined distance, determining a distance between the device and the person associated with the reminder, and detecting the person associated with the reminder if the determined distance is less than or equal to the predetermined distance.

Additionally, detecting, with a device, a person associated with a reminder may include detecting another device associated with the person.

Additionally, detecting another device may include at least one of detecting the another device using Bluetooth communication, detecting the another device using global positioning satellite communication, detecting the another device using cell identification, detecting the another device using a Radio Frequency Identification (RFID) tag, detecting the another device using wireless fidelity (Wi-Fi) communication, detecting the another device using Near Field Communication (NFC), detecting the another device using World Interoperability for Microwave Access (WiMAX) communication, or detecting the another device using ZigBee technology.

Additionally, detecting, with a device, a person associated with a reminder may include at least one of making or receiving a telephone call to or from the person, sending or receiving an email to or from the person, sending or receiving a text message to or from the person, sending or receiving an instant message to or from the person, sending or receiving a voicemail to or from the person, sending or receiving an image to or from the person, sending or receiving a video to or from the person, or sending or receiving an audio file to or from the person.

Additionally, generating the reminder may include at least one of providing the reminder to a user of the device via a visual signal, providing the reminder to the user via an audio signal, providing the reminder to the user via a vibratory signal, or providing the reminder to the user via audio, visual, and vibratory signals.

Additionally, snoozing the reminder may include storing information within the device identifying when to provide the reminder.

According to another aspect, a method may include detecting, with a device, a location associated with a reminder, generating the reminder with the device, and snoozing the reminder until the device detects the location associated with the reminder a second time.

Additionally, the method may include creating, with the device, the reminder associated with the location.

Additionally, creating, with the device, the reminder may include creating a reminder that requests performance of an action associated with the location by a user of the device.

Additionally, detecting, with a device, a location associated with a reminder may include providing a predetermined distance, determining a distance between the device and the location associated with the reminder, and detecting the location associated with the reminder if the determined distance is less than or equal to the predetermined distance.

Additionally, detecting, with a device, a location associated with a reminder may include determining a position of the device using global positioning satellite communication or using cell identification of the device, comparing the position of the device to an address of the location, and detecting the location if the position of the device is within a predetermined distance from the address of the location.

Additionally, detecting, with a device, a location associated with a reminder may include at least one of detecting the location using Bluetooth communication, detecting the location using a Radio Frequency Identification (RFID) tag, detecting the location using wireless fidelity (Wi-Fi) communication, detecting the location using Near Field Communication (NFC), detecting the location using World Interoperability for Microwave Access (WiMAX) communication, or detecting the location using ZigBee technology.

Additionally, generating the reminder may include at least one of providing the reminder to a user of the device via a visual signal, providing the reminder to the user via an audio signal, providing the reminder to the user via a vibratory signal, or providing the reminder to the user via audio, visual, and vibratory signals.

According to yet another aspect, a method may include detecting, with a device, a first occurrence of an event associated with a reminder, generating the reminder with the device, and snoozing the reminder until the device detects a second occurrence of the event associated with the reminder.

Additionally, the method may include creating, with the device, the reminder associated with the event.

Additionally, creating, with the device, the reminder may include creating a reminder that requests performance of an action by a user of the device.

Additionally, detecting, with a device, a first occurrence of an event associated with a reminder includes at least one of making or receiving a telephone call, visiting a particular web site, sending or receiving a text message, sending or receiving an instant message, sending or receiving an email, sending or receiving a voicemail, sending or receiving an image, sending or receiving a video, or sending or receiving an audio file.

Additionally, generating the reminder may include at least one of providing the reminder to a user of the device via a visual signal, providing the reminder to the user via an audio signal, providing the reminder to the user via a vibratory signal, or providing the reminder to the user via audio, visual, and vibratory signals.

Additionally, snoozing the reminder may include storing snooze information within the device.

According to a further aspect, a system may include means configured to detect one of a person, a location, or an event associated with a reminder, means configured to generate the reminder, and means configured to snooze the reminder until one of the person, the location, or the event associated with the reminder is detected again.

According to still another aspect, a device may include a memory to store instructions, and processing logic executing the instructions to enable creation of a reminder associated with one of a person, a location, or an event, enable detection of one of the person, the location, or the event associated with the reminder, enable generation of the reminder, and enable generation of the reminder a second time when one of the person, the location, or the event associated with the reminder is detected again.

According to another aspect, a computer-readable medium that stores computer-executable instructions may include instructions to enable creation of a reminder associated with one of a person, a location, or an event, enable detection of one of the person, the location, or the event associated with the reminder, enable generation of the reminder a first time when one of the person, the location, or the event associated with the reminder is detected, and enable generation of the reminder a second time when one of the person, the location, or the event associated with the reminder is detected again.

### BRIEF DESCRIPTION OF THE DRAWINGS

The accompanying drawings, which are incorporated in and constitute a part of this specification, illustrate one or more embodiments described herein and, together with the description, explain these embodiments. In the drawings:

Fig. 1 is an exemplary diagram illustrating concepts described herein;

Fig. 2 is a diagram of an exemplary device in which systems and methods described herein may be implemented;

Fig. 3 is a diagram of exemplary components of the exemplary device of Fig. 2;

Figs. 4A and 4B are diagrams illustrating creation of an exemplary person-based snooze;

Figs. 5A-5C are diagrams depicting an example of the person-based snooze created in Figs. 4A and 4B;

Figs. 6A and 6B are diagrams illustrating creation of an exemplary location-based snooze;

Figs. 7A-7C are diagrams depicting an example of the location-based snooze created in Figs. 6A and 6B; and

Figs. 8 and 9 are flowcharts of exemplary processes according to implementations described herein.

### DETAILED DESCRIPTION

The following detailed description refers to the accompanying drawings. The same reference numbers in different drawings may identify the same or similar elements. Also, the following detailed description does not limit the invention.

Implementations described herein may relate to a person, location, and/or event based snooze for a device. In one implementation, the device may generate a reminder associated with a person if the device detects that the person is within a predetermined proximity to the device. The device user may elect to snooze the reminder, and the device may snooze the reminder until the next time the person is detected by the device. In another implementation, the device may generate a reminder associated with a location if the device detects that the device is within a predetermined proximity of the location. The device user may elect to snooze the reminder, and the device may snooze the reminder until the next time the device detects the location. In still another implementation, the device may generate a reminder associated with an event if the device detects occurrence of the event. The device user may decide to snooze the reminder, and the device may snooze the reminder until the next time the event occurrence is detected by the device.

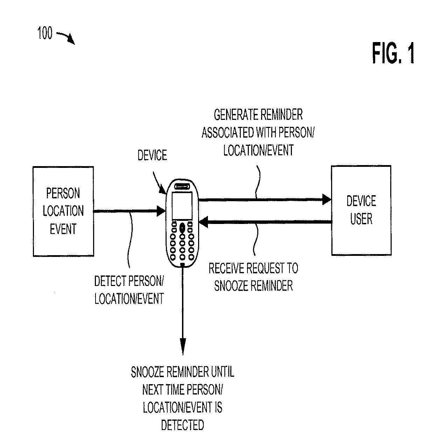

Fig. 1 is an exemplary diagram illustrating concepts described herein. As shown in Fig. 1, a device may detect a person, a location, and/or an event (hereinafter referred to as "person/location/event"), and may generate a reminder associated with the person/location/event to a device user. The device user may decide that he/she does not wish to perform an action associated with the reminder at the present time, but would like to snooze the reminder. The device user may provide this preference to the device, and the device may snooze the reminder until the next time the device detects the person/location/event.

A "device," as the term is used herein, is to be broadly interpreted to include a radiotelephone; a personal communications system (PCS) terminal that may combine a cellular radiotelephone with data processing, a facsimile, and data communications capabilities; a personal digital assistant (PDA) that can include a radiotelephone, pager, Internet/intranet access, web browser, organizer, calendar, a camera (e.g., video and/or still image camera), a sound recorder (e.g., a microphone), a Doppler receiver, and/or global positioning system (GPS) receiver; a laptop; a GPS device; and any other computation or communication device capable of generating and snoozing reminders, such as a personal computer. In one exemplary implementation, a device may be capable of performing an automatic identification method, such as Radio Frequency Identification (RFID). In such an implementation, an RFID tag may be attached to or incorporated into a product, animal, person, location, etc. for the purpose of identification using radio waves with the device.

A "person," as the term is used herein, is to be broadly interpreted to include, for example, a person using a device, friends, acquaintances, family, business colleagues, a telephone number, a user identification, a chat identification, a Session Initiation Protocol (SIP) identification, and/or any person capable of being detected by a device.

A "location," as the term is used herein, is to be broadly interpreted to include, for example, buildings, landmarks, roads, bridges, and/or any location capable of being detected by a device (e.g., via an RFID tag).

An "event," as the term is used herein, is to be broadly interpreted to include, for example, making or receiving a telephone call (e.g., to or from a particular person, number, or address), visiting a particular web site, sending or receiving a text message or an instant message (e.g., to or from a particular person, number, or address), sending or receiving an email (e.g., to or from a particular person, number, or address), sending or receiving a voicemail (e.g., to or from a particular person, number, or address), sending or receiving an image (e.g., to or from a particular person, number, or address), sending or receiving a video (e.g., to or from a particular person, number, or address), sending or receiving an audio file (e.g., sending or receiving a ring tone to or from a particular person, number, or address), running a software application, completion of a software application, and/or any possible "event" capable of being detected by a device.

"Snooze," as the term is used herein, is to be broadly interpreted to include, for example, a mechanism that defers a reminder for performance of an action or provides an additional reminder until a person/location/event is detected by a device in the future.

Although the following description refers to person/location/event based applications, in other implementations, the systems and method described herein may be utilized with things, e.g., animals, print media (e.g., books, magazines, etc.), cartoon characters, film characters, plants, trees, and/or any "thing" capable of being detected by a device.

### EXEMPLARY DEVICE ARCHITECTURE

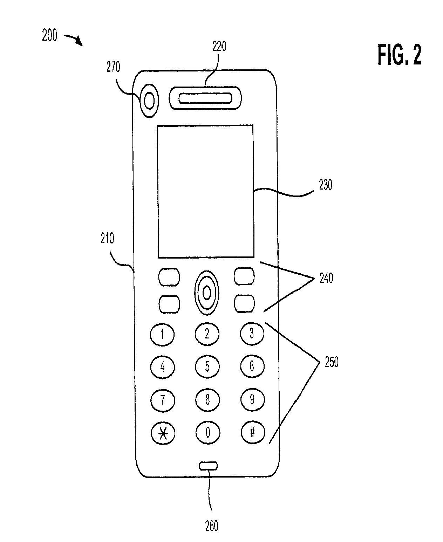

Fig. 2 is a diagram of an exemplary device 200 according to an implementation described herein. As shown in Fig. 2, device 200 may include a housing 210, a speaker 220, a display 230, control buttons 240, a keypad 250, a microphone 260, and a camera 270. Housing 210 may protect the components of device 200 from outside elements. Speaker 220 may provide audible information to a user of device 200. Display 230 may provide visual information to the user. For example, display 230 may provide information regarding reminders, snooze, incoming or outgoing calls, media, games, phone books, the current time, etc. In one implementation, display 230 may provide the user with the ability to create person/location/event based snooze information for reminders. Control buttons 240 may permit the user to interact with device 200 to cause device 200 to perform one or more operations. Keypad 250 may include a standard telephone keypad and/or a standard QWERTY keyboard. Microphone 260 may receive audible information from the user. Camera 270 may enable a user to capture and store video and/or images (e.g., pictures).

Although Fig. 2 shows exemplary components of device 200, in other implementations, device 200 may include additional, different, or fewer components than depicted in Fig. 2. For example, device 200 may include a touch screen (e.g., display 230 may be a touch screen) that may permit the user to interact with device 200 to cause device 200 to perform one or more operations. The touch screen may be manipulated by touching or contacting the display with a pen or a finger. In still other implementations, one or more components of device 200 may perform the functions of one or more other components of device 200.

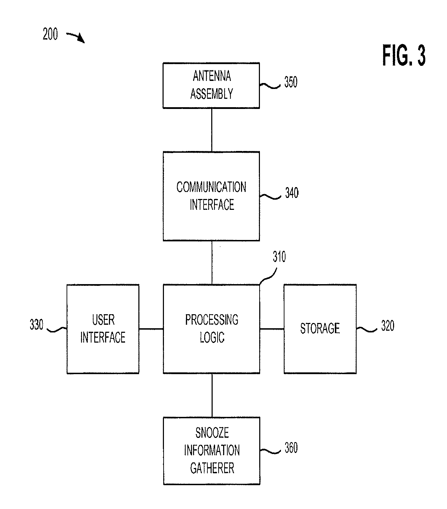

Fig. 3 is a diagram of exemplary components of device 200. As shown in Fig. 3, device 200 may include processing logic 310, storage 320, a user interface 330, a communication interface 340, an antenna assembly 350, and a snooze information gatherer 360. Processing logic 310 may include a processor, microprocessor, an application specific integrated circuit (ASIC), field programmable gate array (FPGA), or the like. Storage 320 may include a random access memory (RAM), a read only memory (ROM), and/or another type of memory to store data and instructions that may be used by processing logic 310 to control operation of device 200 and its components.

User interface 330 may include mechanisms for inputting information to device 200 and/or for outputting information from device 200. Examples of input and output mechanisms might include a speaker (e.g., speaker 220) to receive electrical signals and output audio signals, a camera (e.g., camera 270) to receive image and/or video signals and output electrical signals, a microphone (e.g., microphone 260) to receive audio signals and output electrical signals, buttons (e.g., a joystick, control buttons 240 and/or keys of keypad 250) to permit data and control commands to be input into device 200, a display (e.g., display 230) to output visual information (e.g., information from camera 270), and/or a vibrator to cause device 200 to vibrate.

Communication interface 340 may include, for example, a transmitter that may convert baseband signals from processing logic 310 to radio frequency (RF) signals and/or a receiver that may convert RF signals to baseband signals. Alternatively, communication interface 340 may include a transceiver to perform functions of both a transmitter and a receiver. Communication interface 340 may connect to antenna assembly 350 for transmission and reception of the RF signals. Antenna assembly 350 may include one or more antennas to transmit and receive RF signals over the air. Antenna assembly 350 may receive RF signals from communication interface 340 and transmit them over the air and receive RF signals over the air and provide them to communication interface 340. In one implementation, for example, communication interface 340 may communicate with a network (e.g., a local area network (LAN), a wide area network (WAN), a telephone network, such as the Public Switched Telephone Network (PSTN), a wireless personal area network (WPAN), a metropolitan area network (MAN), an intranet, the Internet, or a combination of networks), another device (e.g., via Bluetooth communications), an RFID tag provided on a location or a thing, etc. in order to detect a person/location/event.

Snooze information gatherer 360 may obtain snooze information from device 200. In one implementation, the snooze information may correspond to a snooze for a reminder stored on device 200 or received by device 200 (e.g., by communication interface 340). In this case, snooze information gatherer 360 may include a media storage device (e.g., storage 320), or a communication device (e.g., communication interface 340) capable of receiving snooze information and/or reminders from another source (e.g., wired or wireless communication with an external media storage device).

As will be described in detail below, device 200 may perform certain operations relating to person/location/event based snooze creation. Device 200 may perform these operations in response to processing logic 310 executing software instructions of an application contained in a computer-readable medium, such as storage 320. A computer-readable medium may be defined as a physical or logical memory device and/or carrier wave.

The software instructions may be read into storage 320 from another computer-readable medium or from another device via communication interface 340. The software instructions contained in storage 320 may cause processing logic 310 to perform processes that will be described later. Alternatively, hardwired circuitry may be used in place of or in combination with software instructions to implement processes described herein. Thus, implementations described herein are not limited to any specific combination of hardware circuitry and software.

### EXEMPLARY PERSON-BASED SNOOZE

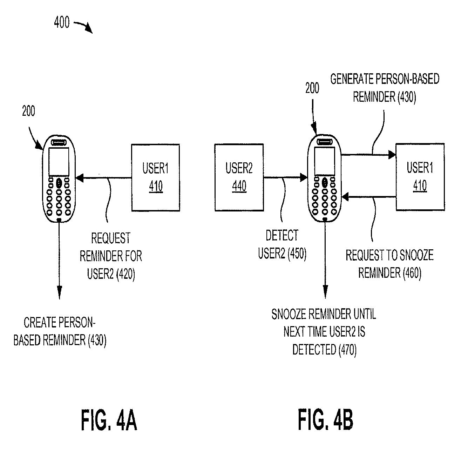

Figs. 4A and 4B are diagrams illustrating creation of an exemplary person-based snooze. As shown in Fig. 4A, a first user (USER1) 410 may send a request 420 to device 200 requesting that a reminder be associated with a second user (USER2) 440. For example, in one implementation, first user 410 may request that device 200 create a reminder that first user 410 perform an action if device 200 detects second user 440. Device 200 may create a person-based reminder 430 associated with detection of second user 440.

As shown in Fig. 4B, device 200 may detect second user 440 (or a device 200 associated with second user 440), as indicated by reference number 450. For example, in one implementation, device 200 may provide a predetermined distance (e.g., three feet), and may detect second user 440 if second user 440 is located a distance from first user 410 that is less than the predetermined distance. Device 200 may detect second user 440 in a variety of ways, e.g., using Bluetooth, GPS, cell identification, RFID tags, wireless fidelity (Wi-Fi), World Interoperability for Microwave Access (WiMAX), Near Field Communication (NFC) technology, ZigBee technology, etc. If device 200 detects second user 440, device 200 may generate person-based reminder 430 associated with second user 440, and first user 410 may receive person-based reminder 430.

First user 410 may dismiss person-based reminder 430 and/or may perform the action associated with person-based reminder 430. For example, first user 410 may wish to inform second user 440 of an idea, and person-based reminder 430 may remind first user 410 of this action. First user 410 may inform second user 440 of the idea and/or may dismiss person-based reminder 430. Alternatively, first user 410 may desire to perform the action associated with person-based reminder 430 the next time first user 410 encounters second user 440. First user 410 may provide a request 460 to device 200 to snooze person-based reminder 430, and device 200 may provide a snooze 470 of person-based reminder 430 until the next time device 200 detects second user 440. Device 200 may store this snooze information (e.g., within storage 320 of device 200).

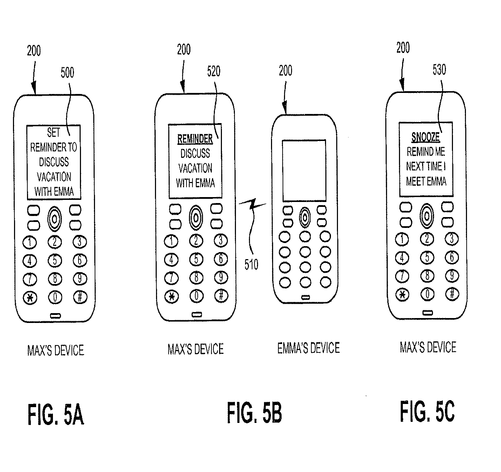

Figs. 5A-5C are diagrams depicting an example of the person-based snooze created in Figs. 4A and 4B. As shown in Fig. 5A, Max may wish to discuss planning a vacation with his girlfriend Emma, and thus may decide to set a person-based reminder to talk to Emma about vacation the next time he sees her. Max may use display 230 of device 200 to set a person-based reminder to discuss vacation with Emma, as shown by reference number 500.

As shown in Fig. 5B, Max and Emma may eventually meet, and Max's device 200 may detect 510 Emma's device 200, e.g., using Bluetooth, GPS, cell identification, RFID tags, Wi-Fi, WiMAX, Near Field Communication (NFC) technology, ZigBee technology, etc. In one implementation, Max's device 200 may provide a predetemined distance, and may detect Emma's device 200 if Emma's device 200 is located a distance from Max's device 200 that is less than the predetermined distance. If Max's device 200 detects Emma's device 200, a person-based reminder 520 may be provided on display 230 of Max's device 200. For example, person-based reminder 520 may remind Max to discuss vacation plans with Emma.

Max may dismiss person-based reminder 520 and/or may discuss vacation plans with Emma. Alternatively, Emma may not want to talk about vacation at this time, but Max may still want to talk about vacation with Emma the next time they meet. Max may utilize display 230 of device 200 to set a snooze 530 for person-based reminder 520 (e.g., display 230 may offer Max the option "Remind me the next time I meet Emma"), as illustrated in Fig. 5C. Max's device 200 may snooze person-based reminder 520 until the next time Max's device 200 detects Emma's device 200. Max's device 200 may store this snooze information (e.g., within storage 320 of Max's device 200).

Although Figs. 4A-5C show creation of an exemplary person-based snooze, in other implementations, device 200 may utilize additional, different, or fewer components than depicted in Figs. 4A-5C to create a person-based snooze. For example, Max's device 200 may include a touch screen (e.g., display 230 may be a touch screen) that may permit Max to interact with Max's device 200 to create the person-based snooze. The touch screen may be manipulated by touching or contacting the display with a pen or a finger.

### EXEMPLARY LOCATION-BASED SNOOZE

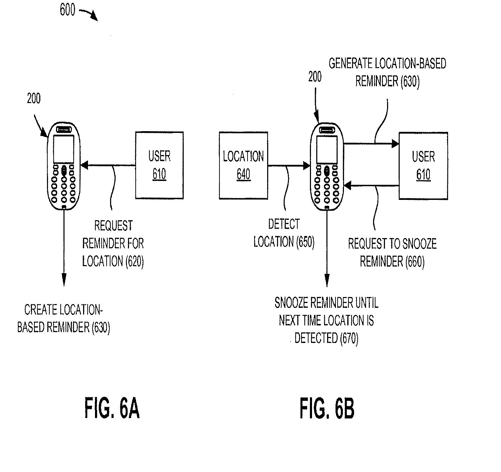

Figs. 6A and 6B are diagrams illustrating creation of an exemplary location-based snooze. As shown in Fig. 6A, a user 610 may send a request 620 to device 200 requesting that a reminder be associated with a location 640. For example, in one implementation, user 610 may request that device 200 create a reminder that user 610 perform an action if device 200 detects location 640. Device 200 may create a location-based reminder 630 associated with detection of location 640.

As shown in Fig. 6B, device 200 may detect location 640 (or a device 200 associated with location 640), as indicated by reference number 650. For example, in one implementation, device 200 may provide a predetermined distance (e.g., three feet), and may detect location 640 if user 610 is located a distance from location 640 that is less than the predetermined distance. Device 200 may detect location 640 in a variety of ways, e.g., using Bluetooth, GPS, RFID tags, Wi-Fi, WiMAX, Near Field Communication (NFC) technology, ZigBee technology, etc. In one implementation, device 200 may utilize GPS or cell identification to determine the coordinates of user 610 and may compare the coordinates of user 610 to coordinates (e.g. an address) of location 640. If device 200 detects location 640, device 200 may generate location-based reminder 630 associated with location 640, and user 610 may receive location-based reminder 630.

User 610 may dismiss location-based reminder 630 and/or may perform the action associated with location-based reminder 630. For example, user 610 may wish to shop for an item at location 640, and location-based reminder 630 may remind user 610 to shop for the item if user 610 is near location 640. User 610 may shop for the item at location 640 and/or may dismiss location-based reminder 630. Alternatively, user 610 may desire to perform the action associated with location-based reminder 630 the next time user 610 encounters location 640. User 610 may provide a request 660 to device 200 to snooze location-based reminder 630, and device 200 may provide a snooze 670 of location-based reminder 630 until the next time device 200 detects location 640. Device 200 may store this snooze information (e.g., within storage 320 of device).

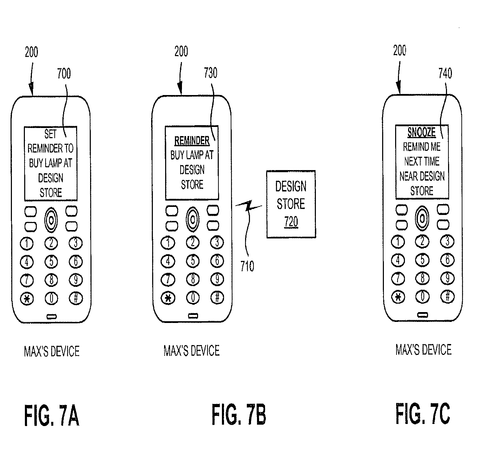

Figs. 7A-7C are diagrams depicting an example of the location-based snooze created in Figs. 6A and 6B. As shown in Fig. 7A, Max may wish to purchase a new lamp at a local design store 720, and thus may decide to set a location-based reminder 700 to purchase the new lamp the next time he is near local design store 720. Max may use display 230 of device 200 to set a location-based reminder to purchase the new lamp, as shown by reference number 700.

As shown in Fig. 7B, Max may eventually be near local design store 720, and Max's device 200 may detect 710 local design store 720, e.g., using Bluetooth, GPS, RFID tags, Wi-Fi, WiMAX, Near Field Communication (NFC) technology, ZigBee technology, etc. In one implementation, Max's device 200 may provide a predetermined distance, and may detect local design store 720 if local design store 720 is located a distance from Max's device 200 that is less than the predetermined distance. If Max's device 200 detects local design store 720, a location-based reminder 730 may be provided on display 230 of Max's device 200. For example, location-based reminder 730 may remind Max to purchase the new lamp at local design store 720.

Max may dismiss location-based reminder 730 and/or may purchase the new lamp at local design store 720. Alternatively, Max may be unable to purchase the new lamp at this time, but Max may still want to purchase the new lamp the next time he is near local design store 720. Max may utilize display 230 of device 200 to set a snooze 740 for location-based reminder 730 (e.g., display 230 may offer Max the option "Remind me the next time I am near the design store"), as illustrated in Fig. 7C. Max's device 200 may snooze location-based reminder 730 until the next time Max's device 200 detects local design store 720. Max's device 200 may store this snooze information (e.g., within storage 320 of Max's device 200).

Although Figs. 6A-7C show creation of an exemplary location-based snooze, in other implementations, device 200 may utilize additional, different, or fewer components than depicted in Figs. 6A-7C to create a location-based snooze. For example, Max's device 200 may include a touch screen (e.g., display 230 may be a touch screen) that may permit Max to interact with Max's device 200 to create the location-based snooze. The touch screen may be manipulated by touching or contacting the display with a pen or a finger.

In other implementations, the systems and methods described herein may be utilized to create an event-based snooze. For example, Max may create an event-based reminder with device 200 to remind Max to perform an action (e.g., call his girlfriend Emma) if one or more events occur (e.g., if Emma sends Max a text message). If Max's device 200 detects the occurrence of the event (e.g., Emma sends Max a text message), Max's device 200 may generate the event-based reminder (e.g., device 200 may remind Max to call Emma). Max may dismiss the event-based reminder and/or may perform the action associated with the event-based reminder (e.g., Max may call Emma). Alternatively, Max may desire to perform the action associated with the event-based reminder the next time the event or another event occurs (e.g., Max may change the event from receiving a text message from Emma to receiving an email from Emma). Max may use device 200 to snooze the event-based reminder until the next time device 200 detects occurrence of the event (e.g., Emma sends Max an email). Device 200 may store this snooze information (e.g., within storage 320 of device 200).

In still other implementations, the systems and methods described herein may be utilized to create multiple person-based reminders and/or snoozes, multiple location-based reminders and/or snoozes, multiple event-based reminders and/or snoozes, and/or combinations of person/location/event based reminders and/or snoozes. For example, Max may wish to discuss vacation with Emma and may create a person-based reminder associated with Emma (e.g., discuss vacation with Emma the next time Max meets Emma) and/or an event-based reminder associated with Emma (e.g., discuss vacation with Emma the next time she contacts Max via email, text message, instant message, etc.). Max may snooze the person-based reminder and/or the event-based reminder until the next time Max comes in contact with Emma (e.g., in person, via email, text message, instant message, etc.).

Furthermore, although Figs. 5A-5C and 7A-7C show generation of a person and/or a location based reminder by displaying the reminder on device 200, in other implementations, device 200 may generate a person/location/event based reminder that is an audio reminder (e.g., via speaker 220 or a vibrator), a visual reminder (e.g., via display 230), a vibratory reminder (e.g., via a vibrator), and/or a combined of audio/visual/vibratory reminder (e.g., via speaker 220, display 230, and a vibrator). For example, a user may record person/location/event based reminder (e.g., via microphone 260 of device 200), and device 200 may play back the recorded reminder (e.g., via speaker 220) when triggered. In other implementations, a person/location/event based snooze described above may be created using audio inputs (e.g., a user of device 200 may use microphone 260 and request that a snooze be created for a reminder), tactile inputs (e.g., via a touch screen display 230, control buttons 240, and/or keypad 250), and/or a combination of audio and tactile inputs.

### EXEMPLARY PROCESSES

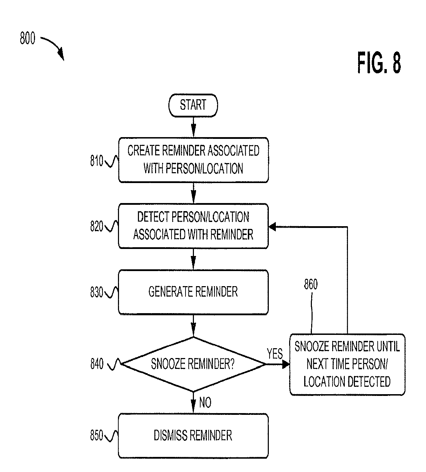

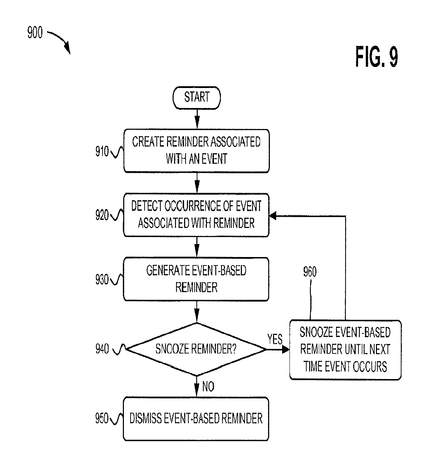

Figs. 8 and 9 are flowcharts of exemplary processes according to implementations described herein. The process of Fig. 8 may generally be described as creation of a person and/or location based reminder and/or snooze. The process of Fig. 9 may generally be described as creation of an event-based reminder and/or snooze.

### Person And/Or Location Based Reminder And/Or Snooze Creation

As shown in Fig. 8, a process 800 may begin with creation of a reminder associated with a person and/or a location (block 810). For example, in one implementation described above in connection with Fig. 4A, first user 410 may request that device 200 create a reminder that first user 410 perform an action if device 200 detects second user 440. Device 200 may create a person-based reminder 430 associated with detection of second user 440. In another implementation described above in connection with Fig. 6A, user 610 may request that device 200 create a reminder that user 610 perform an action if device 200 detects location 640. Device 200 may create a location-based reminder 630 associated with detection of location 640.

As further shown in Fig. 8, process 800 may continue with detection of the person and/or location associated with the reminder (block 820). For example, in one implementation described above in connection with Fig. 4B, device 200 may detect second user 440 (or a device 200 associated with second user 440), as indicated by reference number 450. In another implementation described above in connection with Fig. 6B, device 200 may detect location 640 (or a device 200 associated with location 640), as indicated by reference number 650. In one example, the user of device 200 may provide a predetermined distance when creating the reminder at block 810, and device 200 may detect a person and/or a location if the person and/or location is located a distance from the user of device 200 that is less than the predetermined distance. In other examples, device 200 may detect the person and/or the location in a variety of ways, e.g., using Bluetooth, GPS, cell identification, RFID tags, Wi-Fi, WiMAX, Near Field Communication (NFC) technology, ZigBee technology, etc.

If the person and/or the location is detected, the reminder associated with the person and/or the location may be generated (block 830). For example, in one implementation described above in connection with Fig. 4B, if device 200 detects second user 440, device 200 may generate person-based reminder 430 associated with second user 440, and first user 410 may receive person-based reminder 430. In another implementation described above in connection with Fig. 6B, if device 200 detects location 640, device 200 may generate location-based reminder 630 associated with location 640, and user 610 may receive location-based reminder 630.

As further shown in Fig. 8, it may be determined whether the reminder associated with the person and/or the location is to be snoozed (block 840). If the reminder is not to be snoozed (block 840 - NO), the reminder may be dismissed (block 850). For example, in one implementation described above in connection with Fig. 4B, first user 410 may dismiss person-based reminder 430 and/or may perform the action associated with person-based reminder 430. In another implementation described above in connection with Fig. 6B, user 610 may dismiss location-based reminder 630 and/or may perform the action associated with location-based reminder 630.

If the reminder is to be snoozed (block 840 - YES), then the reminder may be snoozed until the next time the person and/or the location is detected (block 860). For example, in one implementation described above in connection with Fig. 4B, first user 410 may desire to perform the action associated with person-based reminder 430 the next time first user 410 encounters second user 440. First user 410 may provide a request 460 to device 200 to snooze person-based reminder 430, and device 200 may provide a snooze 470 of person-based reminder 430 until the next time device 200 detects second user 440. In another implementation described above in connection with Fig. 6B, user 610 may desire to perform the action associated with location-based reminder 630 the next time user 610 encounters location 640. User 610 may provide a request 660 to device 200 to snooze location-based reminder 630, and device 200 may provide a snooze 670 of location-based reminder 630 until the next time device 200 detects location 640.

### Event Based Reminder And/Or Snooze Creation

As shown in Fig. 9, a process 900 may begin with creation of a reminder associated with an event (block 910). For example, in one implementation, Max may create an event-based reminder with device 200 to remind Max to perform an action (e.g., call his girlfriend Emma) if one or more events occur (e.g., if Emma sends Max a text message).

As further shown in Fig. 9, process 900 may continue with detection of the occurrence of the event associated with the reminder (block 920). If the event occurrence is detected, the event-based reminder may be generated (block 930). For example, in one implementation, if Max's device 200 detects the occurrence of the event (e.g., Emma sends Max a text message), Max's device 200 may generate the event-based reminder (e.g., device 200 may remind Max to call Emma).

It may be determined whether the event-based reminder is to be snoozed (block 940). If the event-based reminder is not to be snoozed (block 940 - NO), the event-based reminder may be dismissed (block 950). For example, in one implementation, Max may dismiss the event-based reminder and/or may perform the action associated with the event-based reminder (e.g., Max may call Emma).

As further shown in Fig. 9, if the event-based reminder is to be snoozed (block 940 - YES), then the event-based reminder may be snoozed until the next time the event occurs (block 960). For example, in one implementation, Max may desire to perform the action associated with the event-based reminder the next time the event or another event occurs (e.g., Max may change the event from receiving a text message from Emma to receiving an email from Emma). Max may use device 200 to snooze the event-based reminder until the next time device 200 detects occurrence of the event (e.g., Emma sends Max an email).

### CONCLUSION

Implementations described herein may relate to a person, location, and/or event based snooze for a device. In one implementation, the device may generate a reminder associated with a person if the device detects that the person is within a predetermined proximity to the device. The device user may elect to snooze the reminder, and the device may snooze the reminder until the next time the person is detected by the device. In another implementation, the device may generate a reminder associated with a location if the device detects that the location is within a predetermined proximity to the device. The device user may elect to snooze the reminder, and the device may snooze the reminder until the next time the location is detected by the device. In still another implementation, the device may generate a reminder associated with an event if the device detects occurrence of the event. The device user may decide to snooze the reminder, and the device may snooze the reminder until the next time the event occurrence is detected by the device.

The foregoing description provides illustration and description, but is not intended to be exhaustive or to limit the invention to the precise form disclosed. Modifications and variations are possible in light of the above teachings or may be acquired from practice of the invention.

For example, while series of acts have been described with regard to Figs. 8 and 9, the order of the acts may be modified in other implementations. Further, non-dependent acts may be performed in parallel.

It should be emphasized that the term "comprises / comprising" when used in the this specification is taken to specify the presence of stated features, integers, steps or components but does not preclude the presence or addition of one or more other features, integers, steps, components or groups thereof.

It will be apparent that aspects, as described above, may be implemented in many different forms of software, firmware, and hardware. The actual software code or specialized control hardware used to implement aspects described herein is not limiting of the invention. Thus, the operation and behavior of the aspects were described without reference to the specific software code--it being understood that one would be able to design software and control hardware to implement the aspects based on the description herein.

No element, act, or instruction used in the present application should be construed as critical or essential to the invention unless explicitly described as such. Also, as used herein, the article "a" is intended to include one or more items. Where only one item is intended, the term "one" or similar language is used, Further, the phrase "based on" is intended to mean "based, at least in part, on" unless explicitly stated otherwise.

## Claims

1. A method comprising the steps of:
- *detecting* (810, 910), with a device (200), an occurrence of a first event associated with a reminder (520, 730) and generating (830, 930) the reminder (520, 730) with the device (200) in response to the first event, where the method is **characterized by**:
- *changing* by a user input, after the reminder (520, 730) has been generated by the device (200), the first event associated with the reminder (520, 730) to a second event, where the second event is of a type different than that of the first event, so that the reminder (520, 730) will be triggered upon an occurrence of the second event;
- *snoozing* (840, 940) the reminder (520, 730) associated with the occurrence of the second event; and
- *generating* the reminder (520, 730), with the device (200), when the device detects the occurrence of the second event. 15

2. The method of claim 1, where the reminder (520, 730) comprises:
a request to perform an action associated with an occurrence of the first event or the occurrence of the second event.

3. The method of claim 1, where the step of detecting, with the device (200), the occurrence of the first event or the occurrence of the second event associated with the reminder (520, 730) comprises the steps of:
- *providing* the device (200) with a predetermined distance;
- *determining* a distance between the device (200) and a person associated with the reminder (520, 730); and
- *detecting* (820, 920) the person associated with the reminder (520, 730), if the determined distance is less than or equal to the predetermined distance.

4. The method of claim 1, where the step of detecting, with the device (200), the 30 occurrence of the first event or the occurrence of the second event associated with the reminder (520, 730) comprises the step of:
- *detecting* another device (200) associated with a person associated with the reminder (520, 30).

5. The method of claim 4, where the step of detecting the another device (200) comprises at least one of:
- *detecting* the another device (200) using Bluetooth communication;
- *detecting* the another device (200) using global positioning satellite communication;
- *detecting* the another device (200) using cell identification;
- *detecting* the another device (200) using a Radio Frequency Identification "RFID" tag;
- *detecting* the another device (200) using wireless fidelity "Wi-Fi" communication;
- *detecting* the another device (200) using Near Field Communication "NFC";
- *detecting* the another device (200) using World Interoperability for Microwave Access "WiMAX" communication; or
- *detecting* the another device (200) using ZigBee technology.

6. The method of claim 1, where the step of detecting, with the device (200), the occurrence of the first event or the occurrence of the second event associated with the reminder (520, 730) comprises at least one of:
- *sending* or receiving a telephone call to or from a person associated with the reminder (520, 730);
- *sending* or receiving an email to or from the person associated with the reminder (520, 730);
- *sending* or receiving a text message to or from the person associated with the reminder (520, 730);
- *sending* or receiving an instant message to or from the person associated with the reminder (520, 730);
- *sending* or receiving a voicemail to or from the person associated with the reminder 25 (520, 730);
- *sending* or receiving an image to or from the person associated with the reminder (520, 730);
- *sending* or receiving a video to or from the person associated with the reminder (520, 730); or
- *sending* or receiving an audio file to or from the person associated with the reminder (520, 730); or
- *visiting* a particular website associated with the reminder (520, 730).

7. The method of claim 1, where the step of providing the reminder (520, 730) to a user of the device (200), comprises at least one of:
- *providing* the reminder (520, 730) to the user of the device (200) via a visual signal;
- *providing* the reminder (520, 730) to the user via an audio signal;
- *providing* the reminder (520, 730) to the user via a vibratory signal; or
- *providing* the reminder (520, 730) to the user via audio, visual, and vibratory signals.

8. The method of claim 1, where the step of snoozing the reminder (520, 730) comprises the step of:
- *storing* information within the device (200) identifying when to provide the reminder (520, 730).

9. The method of claim 1, where the step of detecting, with the device (200), the occurrence of the first event or the occurrence of the second event associated with the reminder (520, 730) comprises the steps of:
- *providing* the device (200) with a predetermined distance;
- *determining* a distance between the device (200) and a location associated with the reminder (520, 730); and
- *detecting* (820, 920) the location associated with the reminder (520, 730), if the determined distance is less than or equal to the predetermined distance.

10. The method of claim 1, where the step of detecting, with a device (200), the occurrence of the first event or the occurrence of the second event associated with the reminder (520, 730) comprises the steps of:
- *determining* a position of the device (200) using global positioning satellite communication or using cell identification of the device;
- *comparing* the position of the device (200) to an address of a location; and
- *detecting* (820, 920) the location, if the position of the device (200) is within a predetermined distance from the address of the location.

11. The method of claim 1, where the step of detecting, with a device (200), the occurrence of the first event or the occurrence of the second event associated with a reminder (520, 730) comprises at least one of:
- *detecting* a location using Bluetooth communication;
- *detecting* the location using a Radio Frequency Identification "RFID" tag;
- *detecting* the location using wireless fidelity "Wi-Fi" communication;
- *detecting* the location using Near Field Communication "NFC";
- *detecting* the location using World Interoperability for Microwave Access "WiMAX" communication; or
- *detecting* the location using ZigBee technology.

12. A device (200), including a processor (310) and a memory (320) to store instructions that, when executed by the processor (310), cause the processor (310) to:
- detect an occurrence of a first event associated with a reminder (520, 730) and generate the reminder (520, 730), in response to the detection of the first event, where the processor is further caused to;
- change by a user input, after the reminder (520, 730) has been provided to a user, the first event associated with the reminder (520, 730) to a second event, where the second event is of a type different than that of the first event, so that the reminder (520, 730) will be triggered upon an occurrence of the second event;
- snooze the reminder (520, 730) associated with the occurrence of the second event; and
- generate the reminder (520, 730), with the device (200), when the device (200) detects the occurrence of the second event.

13. The device (200) of claim 12, where the reminder (520, 730) comprises:
a request to perform an action associated with an occurrence of the first event or the occurrence of the second event.

14. A computer-readable medium, having a memory that stores computer-executable instructions to cause a processor (310) to:
- detect an occurrence of a first event associated with a reminder and generate the 25 reminder (520, 730), in response to the detection of the first event, where the computer-readable medium further storing instructions to cause the processor to;
- change by a user input, after the reminder has been received by a user, the first event associated with the reminder to a second event, where the second event is of a type different than that of the first event, so that the reminder will be triggered upon an 30 occurrence of the second event;
- snooze the reminder associated with the occurrence of the second event; and
- generate the reminder, with the device (200), when the device (200) detects the occurrence of the second event.

15. The computer-readable medium of claim 14, where the reminder (520, 730) comprises:
a request to perform an action associated with an occurrence of the first event or the occurrence of the second event.
